# EUROPÄISCHE PATENTSCHRIFT

(11) **EP 1 512 207 B1**
(45) Veröffentlichungstag und Bekanntmachung des Hinweises auf die Patenterteilung: **26.10.2005**
(21) Anmeldenummer: 03722040.7
(22) Anmeldetag: 20.05.2003
(51) Int. Cl.: H02H 3/33

(54) **FEHLERSTROMSCHUTZSCHALTER**
RESIDUAL CURRENT CIRCUIT BREAKER
INTERRUPTEUR DE PROTECTION CONTRE LES COURANTS DE FUITE

(30) Priorität: 27.05.2002 AT 8012002
(43) Veröffentlichungstag der Anmeldung: 09.03.2005
(73) Patentinhaber: Moeller Gebäudeautomation KG, 3943 Schrems (AT)
(72) Erfinder: KOCH, Michael, A-1190 Wien (AT); RITZINGER, Georg, A-3424 Wolfpassing (AT)
(74) Vertreter: Gibler, Ferdinand
(86) Internationale Anmeldenummer: PCT/AT2003/000147
(87) Internationale Veröffentlichungsnummer: WO 2003/100938

(56) Entgegenhaltungen:
- WO-A-01/95451

## Beschreibung

Die Erfindung betrifft einen Fehlerstromschutzschalter mit einer Einheit zur Detektion eines Fehlerstromes innerhalb eines elektrischen Energieversorgungsnetzes und einer Netztrenn-Einheit, wobei die Einheit zur Detektion eines Fehlerstromes eine Vorrichtung zur signalgetreuen Aufnahme des Fehlerstromes, welche mit dem Energieversorgangsnetz koppelbar ist umfssst, die Einheit zur Detektion eines Fehlerstromes eine Fehlerstromanalyse-Einheit zur spektralen Charakterisierung des Fehlerstromes umfasst, die mit der Netztrenn-Einheit verbunden ist.

Durch die zunehmende Verwendung von Umrichtern, Schaltnetzteilen, Leistungselektronik-Einheiten od. dgl. in Energieversorgungsnetzen ist im verstärkten Ausmaß mit nicht sinusförmigen Ableitströmen zu rechnen. Während reine Sinussignale bei herkömmlichen Fehlerstromdetektions-Systemen, wie z.B. FI-Schaltern, keine Fehlauslösungen verursachen, führen die mit Oberwellen behafteten Signale und nicht-harmonische Überlagerungen von Signalen bei der derzeit zur Fehlerstromdetektion verwendeten Analogelektronik zu ungewollten Effekten, wie Gleichrichtung, Demodulation, Resonanz- und Filterverhalten usw., die ab einer bestimmten Komplexität der für die Fehlerdetektion vorgesehenen elektronischen Schaltungsanordnung das Abschaltverhalten negativ beeinflussen und daher zur Beeinträchtigung der Sicherheit führen können. Demodulationseffekte, Koppelkapazitäten und

Resonanzeffekte od. dgl. sind somit die Ursache für ein nicht vorhersagbares Abschaltverhalten konventioneller Fehlerstromschutzschalter.

Die WO 01 95451 A behandelt eine software- unterstützte Fehlerstromermittlung für Sicherheits- und Überwachungssysteme. Der Fehlerstrom wird dabei signalgetreu angebildet und die Frequenz eines auftretenden Fehlerstroms wird mittels einer Softwareroutine ermittelt und der Fehlerstrom klassifiziert und bewertet. Der Fehlerstrom wird in eine von drei Frequenzklassen eingeteilt und gegebenenfalls hinsichtlich der Art des Fehlerstroms weiter unterteilt, d.h. Wechselfehlerstrom, pulsierender Fehlerstrom, Gleichstrom. Je nach Einteilung des Fehlerstroms kommen andere, gespeicherte Auslösegrenzwerte für die Höhe des Fehlerstroms zum Einsatz. Nachteilig an einer Ausführung gemäß der WO 01 95451 A ist, dass diese lediglich für einen einzigen Fehlerstrom mit einer bestimmten Frequenz beschrieben. Mit einem Verfahren gemäß der WO 01 95451 A kann kein komplexes Fehlerstromsignal, welches sich aus verschiedenen Komponenten mit unterschiedliehen Frequenzen zusammensetzt signalgetreu bewertet werden.

Aufgabe der Erfindung ist es daher, einen Fehlerstrom-Schutzschalter anzugeben, der auch bei nicht rein sinusförmigen Fehlerströmen ein vorhersagbares Auslöseverhalten zeigt.

Weitere Aufgabe der Erfindung ist es, die Detektion von Fehlerströmen über einen weiten Frequenzbereich zu ermöglichen.

Aufgabe der Erfindung ist es weiters, eine laufende Beurteilung der in einem Netz auftretenden Fehlentröme abrufen zu können.

Erfindungsgemäß wird dies dadurch erreicht, dass die Fehlerstromanalyse-Einheit zumindest eine Filter-Einheit, mit, vorzugsweise tieffrequenter, Bandpasscharakteristik zur Filterung des Fehlerstromsignals, und eine Transformations-Einheit, zum Transformieren des in der Vorrichtung zur signalgetreuen Aufnahme des Fehlerstromes gebildete Fehlerstromsignal aus dem Zeitbereich in einen Bildbereich, vorzugsweise in den Frequenzbereich, umfasst.

Auf diese Weise wird der Fehlerstrom nicht nur mehr nach seinem Effektivwert beurteilt, sondern als Signal betrachtet, dessen Frequenzanteile mit Hilfe von mathematischen Methoden einer Signalanalyse zugeführt werden. Aufgrund der dadurch erzielten Ergebnisse kann eine präzise Überwachung des zulässigen Maximalwerts durchgeführt und damit eine vorhersagbare Auslösung des Fehlerstrom-Schutzschalters bewirkt werden. Durch die Filter-Einheit können vor allem der Anteil der niederfrequenten Schwingungen am Fehlerstrom bei der Messwertberechnung berücksichtigt werden.

Mit sinnvollem Aufwand wird diese Betrachtungsweise des Fehlerstromes durch digitale Signalverarbeitung ermöglicht. In weiterer Ausbildung der Erfindung kann vorgesehen sein, daß die Einheit zur Detektion eines Fehlerstromes weiters eine Einheit zur Abtastung und Quantisierung des Fehlerstromes, vorzugsweise einen Analog-Digital-Wandler umfaßt. An welcher Stelle des Signalverarbeitungspfades eine Umwandlung von Analogsignal in Digitalsignal erfolgt, kann je nach Gestaltung der Signalverarbeitung unterschiedlich sein, für die Realisierung sind insbesondere digitale Signalprozessoren geeignet.

Um eine Verfälschung des im Analog-Digitalwandler abgetasteten Signals zu vermeiden, kann gemäß einer weiteren Ausführungsform der Erfindung die Einheit zur Detektion eines Fehlerstromes weiters ein Anti-Aliasing-Filter umfassen.

Eine weitere Ausführungsform der Erfindung kann darin bestehen, daß die Vorrichtung zur signalgetreuen Aufnahme des Fehlerstromes durch eine Förster-Sonde gebildet ist, deren Ausgang mit einer Regler-Einheit verbunden ist, welche das am Ausgang der Förster-Sonde anliegende Ausgangssignal auf Null kompensiert.

Das Ausgangssignal der Förstersonde wird dabei als Regelgröße für die Regler-Einheit verwendet, dessen Aufgabe es ist, das Ausgangssignal auf Null zu kompensieren. Auf diese Weise entsteht ein signalgetreues Abbild des Fehlerstromes.

Um den Magnetwerkstoff der Förster-Sonde wechselseitig in Sättigung zu bringen, kann in weiterer Ausbildung der Erfindung ein Modulator zur Vormagnetisierung der Förster-Sonde vorgesehen sein. Ein Fehlerstromsignal kann nun daran erkannt werden, daß es zu einer abweichenden Aussteuerung des Magnetwerkstoffes führt, als es durch die Vormagnetisierung vorgegeben ist.

Als Sonde können auch andere Sondentypen verwendet werden, die in der Lage sind, einen Fehlerstrom signalgetreu darzustellen. Ohne Einschränkung der Allgemeinheit kann daher in Weiterbildung der Erfindung vorgesehen sein, daß die Vonichtung zur signalgetreuen Aufnahme des Fehlerstromes durch Shunts, Hall-Bauelemente oder aus Kombinationen aus Magnet- und Hallbauelementen gebildet ist.

Gemäß einer weiteren Ausbildung der Erfindung kann vorgesehen sein, daß die zumindest eine Filter-Einheit durch eine Filter-Einheit mit Tiefpaßcharakteristik gebildet ist, deren Ausgang mit einer Signalbewertungs-Einheit, vorzugsweise einer Einheit zur Berechnung des Effektivwertes des gefilterten Fehlerstromsignals, verbunden ist, daß die Transformations-Einheit mit einer Spektralbewertungs-Einheit, vorzugsweise einer Einheit zur Berechnung des Effektivwertes des Frequenzspektrums verbunden ist, und daß der Ausgang der Signalbewertungs-Einheit und der Ausgang der Spektralbewertungs-Einheit mit Eingängen einer Summier-Einheit verbunden sind und der Ausgang der Summier-Einheit mit einer Maximalwertüberwachungs-Vorrichtung verbunden ist, die an die Netztrenn-Einheit angeschlossen ist, welche Maximalwertüberwachungs-Vorrichtung bei Überschreitung eines vorbestimmbaren Grenzwertes die Netztrenn-Einheit betätigt.

Eine vielfach bereits mit Unterstützung integrierter Schaltkreise anwendbare Transformationsmethode stellt die Fourier-Transformation, insbesondere in Form von Fast-Fourier-Transformation dar. Eine weitere Ausführungsform der Erfindung kann daher darin bestehen, daß die Transformations-Einheit durch eine Fourier-Transformations-Einheit, insbesondere eine diskrete Fourier-Transformations-Einheit gebildet ist.

Es können aber auch andere mathematische Transformationsmethoden im Rahmen der Erfindung sinnvoll angewendet werden. Eine bevorzugte Variante der Erfindung kann darin bestehen, daß die Transformations-Einheit durch eine Gabor-Transformations-Einheit oder eine Wavelet-Transformations-Einheit gebildet ist, die Aussagen über das Zeitverhalten des Frequenzspektrums des Fehlerstromsignals ermöglichen.

Eine weitere Ausgestaltung der Erfindung kann darin bestehen, daß zwischen den Ausgang der Transformations-Einheit und den Eingang der Spektralbewertungs-Einheit eine Korrelations-Einheit geschaltet ist, welche mit einer Einheit zur Speicherung zumindest eines Vergleichsspektrums verbunden ist.

Durch den Vergleich mit einem den Normalzustand charakterisierenden Vergleichsspektrum kann die Schwelle für eine Maximalwert-Überschreitung auf einen bestimmten Frequenzbereich bezogen werden.

Eine weitere Ausführungsform der Erfindung kann darin bestehen, daß der Ausgang der Transformations-Einheit an den Eingang einer Signalkonfigurations-Einheit schaltbar ist, die mit einem Speicher-Eingang der Einheit zur Speicherung zumindest eines Vergleichsspektrums sowie mit einem Eingang der zumindest einen Filter-Einheit zur Einstellung von Filterkoeffizienten verbunden ist.

In der Signalkonfigurations-Einheit wird das für den Vergleich in der Korrelations-Einheit erforderliche Signal bearbeitet und analysiert. Weiters ermöglicht sie die Beeinflussung der Filterkoeffizienten der Filter-Einheit.

Eine andere Variante der Erfindung kann darin bestehen, daß die zumindest eine Filter-Einheit durch zwei oder mehrere parallelgeschaltete Filter-Einheiten mit Bandpaßcharakteristik gebildet ist, die Eingänge zur Einstellung von Filterkoeffizienten aufweisen und deren Ausgänge jeweils über eine Signalbewertungs-Einheit mit Eingängen einer Summier-Einheit verbunden sind und der Ausgang der Summier-Einheit mit einer Maximalwertüberwachungs-Vorrichtung verbunden ist, die an die Netztrenn-Einheit angeschlossen ist, welche Maximalwertüberwachungs-Vorrichtung bei Überschreitung eines vorbestimmbaren Grenzwertes die Netztrenn-Einheit betätigt, und daß die Transformations-Einheit mit einer Signal-Konfigurations-Einheit verbunden ist, deren Ausgänge mit den Eingängen zur Einstellung von Filterkoeffizienten verbindbar sind.

Mit Hilfe der zwei oder mehreren Filter-Einheiten mit BandpaB-Charakteristik wird der gesamte interessierende Frequenzbereich für die Fehlerstromsignal abgedeckt. Die FilterKoeffizienten werden mit Hilfe der Transformations-Einheit bestimmt. Nach Einstellung der Koeffizienten geschieht die Fehlerstrom-Überwachung mit Hilfe der Filter-Einheiten im Zeitbereich.

Weiters betrifft die Erfindung ein Verfahren zur Fehlerstrom-Überwachung eines Energieversorgungsnetzes, bei dem eine Netztrenn-Einheit betätigt wird, sobald eine Maximalwertüberschreitung eines aus einer Fehlerstrommessung abgeleiteten Fehlerstrom-Meßwertes festgestellt wird.

Die eingangs genannten Aufgaben der Erfindung werden erfindungsgemäß dadurch gelöst, dass das signalgetreue Fehlerstromsignal aus dem Zeitbereich in den Bildbereich, vorzugsweise in den Frequenzbereich, transformiert und aus dem sich ergebenden Spektrum ein Teilbetrag des Fehlerstrom-Messwerts berechnet und/oder die Einstellung der Filterkoeffizienten zumindest eines Filters mit Bandpasscharakteristik zur, vorzugsweise tieffrequenten, Filterung des signalgetreuen Fehlerstromsignals bestimmt wird, wobei aus dem Ausgangssignal des zumindest einen Filters mit Bandpasscharakteristik der Fehlerstrom-Messwert oder ein Teilbetrag desselben berechnet wird.

In Weiterführung des erfindungsgemäßen Verfahrens kann vorgesehen sein, dass das Spektrum des Fehlerstromsignals mit wenigstens einem gespeicherten Frequenzspektrum verglichen wird. Dadurch kann das Fehlerstromsignal mit den typischerweise in der zu schützenden Anlage auftretenden spektralen Fehlerstromkomponenten verglichen werden und neu hinzukommende spektrale Fehlerstromkomponenten erkennen.

In diesem Zusammenhang kann vorgesehen sein, dass aus dem aus dem Spektrum berechneten Teilbetrag des Fehlerstrom-Messwerts und dem aus dem wenigstens einen Filter mit Bandpasscharakteristik berechneten Teilbetrag des Fehlerstrom-Messwerts der Fehlerstrom-Messwert gebildet wird. Dadurch werden alle ermittelten Teilbeträge bewertet.

Durch die Bewertung des Fehlerstromes als Signal mit einem Frequenzspektrum wird eine Fehlauslösung des Fehlerstromschutzschalters vermieden.

Nachfolgend wird die Erfindung anhand der in den Zeichnungen dargestellten Ausführungsbeispielen eingehend erläutert. Es zeigt dabei
Fig. 1 ein Blockschaltbild einer Ausführungsform des erfindungsgemäßen Fehlerstromschutzschalters;
Fig.2 ein vereinfachtes Blockschaltbild des Fehlerstromschutzschalters gemäß Fig.1;
Fig.3 ein vereinfachtes Blockschaltbild einer weiteren Variante der Erfindung;
Fig.4 eine schematische Darstellung des Konfigurations-Betriebs des Fehlerstromschutzschalters nach Fig.1;
Fig.5 eine schematische Darstellung des Normal-Betriebs des Fehlerstromschutzschalters nach Fig.1 und
Fig.6 ein Teil eines Blockschaltbildes einer weiteren Ausführungsform des erfindungsgemäßen Fehlerstromschutzschalters.

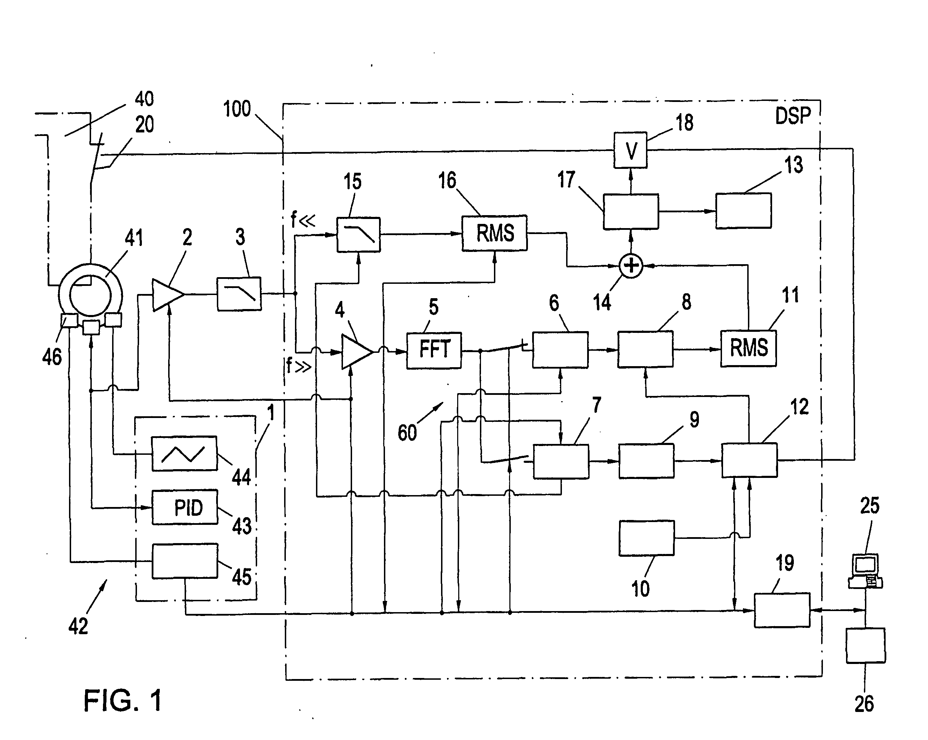

In Fig.1 ist ein allgemeines elektrisches Energieversorgungsnetz 40 schematisch gezeigt, dessen Zugang für einen nicht dargestellten Verbraucher durch eine Netztrenn-Einheit 20 unterbrochen werden kann. Sobald im Energieversorgungsnetz 40 ein Fehlerstrom zu fließen beginnt, der einen vorbestimmbaren Fehlerstrom-Meßwert übersteigt, wird die Netztrenn-Einheit 20 betätigt und dadurch eine Gefährdung von Personen verhindert. Das Auftreten eines solchen Fehlerstromes wird durch eine Einheit zur Detektion eines Fehletstromes 42 überwacht.

Erfindungsgemäß umfaßt die Einheit zur Detektion eines Fehlerstromes 42 eine Vorrichtung zur signalgetreuen Aufnahme des Fehlerstromes 1, 41, welche mit dem Energieversorgungsnetz 40 koppelbar ist und die im Rahmen der Erfindung in unterschiedlicher Weise ausgebildet sein kann.

Im Ausführungsbeispiel gemäß Fig. 1 ist die Vorrichtung zur signalgetreuen Aufnahme des Fehlerstromes durch eine Förster-Sonde 41 gebildet ist, deren Ausgang mit einer Regler-Einheit 1 verbunden ist, welche das am Ausgang der Förster-Sonde 41 anliegende Ausgangssignal auf Null kompensiert. Die Regler-Einheit 1 umfaßt einen PID-Regler 43, dessen Regelgröße durch das Ausgangssignal der Förstersonde 41 gebildet ist. Durch das Kompensieren des Ausgangssignals der Förster-Sonde 41 wird am Ausgang des PID-Reglers 43 ein signalgetreues Abbild des Fehlerstromes generiert, welches als Fehlerstromsignal weiterverarbeitet wird.

Als Vorrichtung zur signalgetreuen Aufnahme des Fehlerstromes können aber auch andere Vorrichtungen Verwendung finden, so z.B. Shunts, Hallbauelemente oder Kombinationen aus Magnet- und Hallbauelementen. Die dabei verwendeten Regler-Typen unterliegen wie im vorgenannten Anwendungsfall für die Förstersonde 41 ebenfalls keinerlei Einschränkungen. Die auf diese Weise realisierte signalgetreue Abbildung des Fehlerstromes erlaubt die Detektion von Fehlerströmen innerhalb eines sehr weiten Frequenzbereiches, z.B. von 0 Hz, also Gleichstrom, bis ungefähr 20 kHz.

Zur Vormagnetisierung der Förstersonde 41 ist ein Modulator 44 vorgesehen, dessen Aufgabe darin besteht, den Magnetstoff der Förstersonde 41 wechselseitig in Sättigung zu bringen. Dies kann durch einen geeigneten Signalgenerator geschehen, der mit einer Spule der Förstersonde 41 verbunden ist. Es entsteht ein Spektrum, welches, da es z.B. von einem Rechtecksignal abgeleitet ist, nur ungeradzahlige Oberwellen enthält. Ein Fehlerstromsignal führt nun zu einer anderen Aussteuerung des Magnetwerkstoffes, was dann zum Auftreten von geradzahligen Oberwellen führt. Bei der Förstersonde 41 wird z.B. die zweite Harmonische (geradzahlige Oberwelle) zur Beurteilung des Fehlersignals herangezogen. Hier wird dann die zweite Oberwelle mit Hilfe des PID-Reglers 43 auf Null kompensiert, um so ein signalgetreues Abbild des Fehlerstromsignals zu erhalten.

Eine mit dem PID-Regler 43 verbundene Korrektur-Einheit 45 ist mit einer im Bereich der Förstersonde 41 angeordneten Temperaturmeßsonde 46 verbunden und mißt deren Temperatur. Auf diese Weise kann eine Kompensation des Temperaturganges der Förstersonde 41 vorgenommen werden.

Zur Beurteilung des Fehlerstromsignals umfaßt die Einheit zur Detektion eines Fehlerstromes 42 erfindungsgemäß weiters eine Fehlerstromanalyse-Einheit 100 zur spektralen Charakterisierung des Fehlerstromes, die mit der Netztrenn-Einheit 20 verbunden ist.

Um die Schwierigkeiten, die bei den bisher bekannten Fehlerstromschutzschaltern auftreten, zu vermeiden, wird der Fehlerstrom nicht allein aus einer einfachen Schwellwertüberschreitung bestimmt, sondern als ein von der Zeit abhängiges Signal unter Berücksichtigung der verschiedenen Frequenzanteile behandelt, aus dem sich dieses Signal zusammensetzt. Nach durchgeführter mathematischer Analyse des Fehlerstromsignals kann eine geeignete Reaktion als Ergebnis der Auswertung erfolgen.

Grundsätzlich kann das aus der Einheit zur Detektion eines Fehlerstromes 42 abgeleitete Fehlerstromsignal entweder analog oder digital weiterverarbeitet werden. In der Praxis wird bevorzugt die Umwandlung des zunächst analogen Fehlerstromsignals in ein digitales Fehlerstromsignal durchgeführt, um den Aufwand für die Bewertung des Fehlerstromsignals möglichst gering zu halten, wodurch eine Miniaturisierung des erfindungsgemäßen Fehlerstromschutzschalters möglich ist.

Das aus dem PID-Regler 43 gewonnene, signalgetreue Fehlerstromsignal wird in Fig. 1 einem mit dem Ausgang des PID-Reglers 43 verbundenen Verstärker 2 mit einem variablen Verstärkungsfaktor zugeführt, der beispielsweise über die Korrektur-Einheit 45 beeinflußt werden kann, um eine Temperaturkompensation der Förster-Sonde 41 über den Verstärkungsfaktor zu ermöglichen.

Am Ausgang des Verstärkers 2 ist eine Einheit zur Abtastung und Quantisierung des Fehlerstromes in Form eines Analog-Digital-Wandlers 3 angeschlossen, der das analoge Fehlerstromsignal in digitale Information umwandelt. Diese Umwandlung kann je nach Aufbau des erfindungsgemäßen Fehlerstromschutzschalters auch an einer anderen Stelle des Signalpfades geschehen.

Zur Vermeidung von Abtastfehlern ist im Analog-Digital-Wandler 3 weiters ein aus dem Stand der Technik bekannter Anti-Aliasing-Filter vorgesehen.

Der Verstärker 2 kann wahlweise als analoge Signalverstärkungseinheit an der in Fig.1 gezeigten Stelle vorgesehen sein, er kann aber auch softwaremäßig durch Multiplikation des im Analog-Digital-Wandler 3 digitalisierten Fehlerstromsignals mit Koeffizienten realisiert sein, in welchen Koeffizienten z.B. der Temperaturgang der Förstersonde 41 berücksichtigt ist.

Nach dem Analog-Digital-Wandler 3 wird das digitalisierte Fehlerstromsignal einerseits einem Filterpfad 50 und andererseits einem Transformationspfad 51 zugeführt, wobei grob gesprochen im Filterpfad 50 der niederfrequente Anteil des Fehlerstromsignals, z.B. im Bereich kleiner als 400 Hz, und im Transformationspfad 51 der hochfrequente Anteil des Fehlerstromsignals, z.B. im Bereich größer als 400 Hz, verarbeitet werden. Zu diesem Zweck umfaßt die Fehlerstromanalyse-Einheit zumindest eine Filter-Einheit 15 und eine Transformations-Einheit 5, in welcher das in der Vorrichtung zur signalgetreuen Aufnahme des Fehlerstromes gebildete Fehlerstromsignal aus dem Zeitbereich in einen Bildbereich, vorzugsweise in den Frequenzbereich, transformierbar ist.

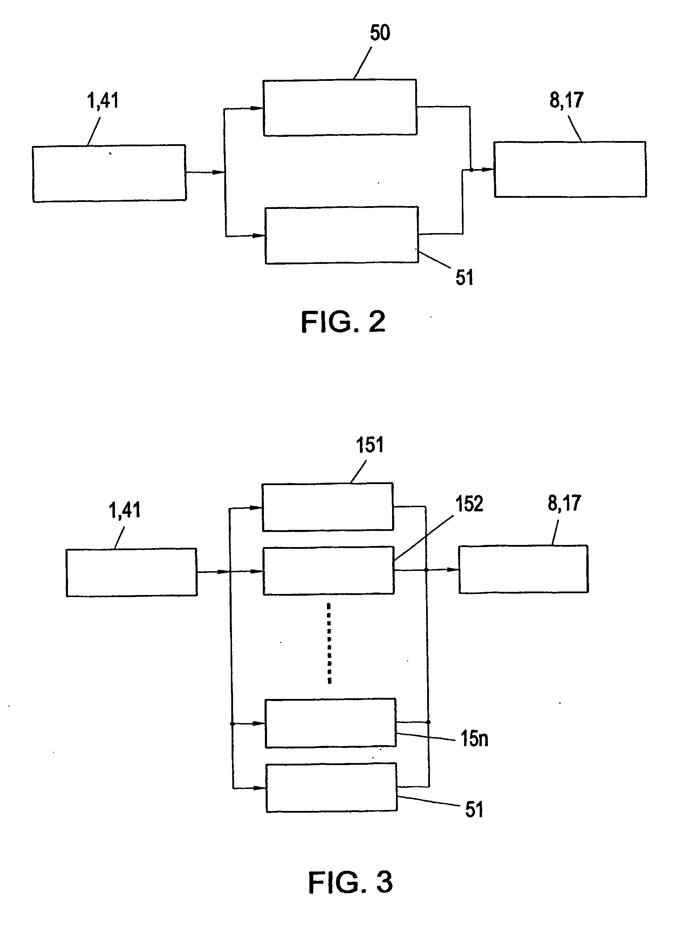

Fig.2 zeigt ein vereinfachtes Blockschaltbild des in Fig.1 gezeigten Fehlerstromschutzschalters. Das oder die im Filterpfad 50 verwendeten Filter kann bzw. können durch Ermittlung in einem nachfolgend noch beschriebenen Konfigurations-Betrieb an die Gegebenheiten des gemessenen Fehlerstromsignals angepaßt werden. Im Transformationspfad 51 werden die höheren Signalfrequenzen des gemessenen Fehlerstromsignals durch mathematische Transformation verarbeitet.

Alternativ können auch mehrere parallele Filterpfade 151, 152, .... 15n zum Einsatz kommen, wie in Fig.3 dargestellt, welche zusammen einen bestimmten Frequenzbereich überdecken.

Im Ausführungsbeispiel gemäß Fig.1 ist die Filter-Einheit durch eine Filter-Einheit mit Tiefpaßcharakteristik 15 gebildet ist, deren Ausgang mit einer Signalbewertungs-Einheit, die in Fig.1 als Einheit zur Berechnung des Effektivwertes 16 des gefilterten Fehlerstromsignals realisiert ist, verbunden ist. Als Durchlaßbereich kann z.B. 0 Hz bis 400 Hz ausgeführt sein, wobei der Eingang der Filter-Einheit mit Tiefpaßcharakteristik 15 mit dem Ausgang des Analog-Wandlers 3 verbunden ist. Bevorzugt ist die Filter-Einheit 15 als digitaler Filter implementiert, es kann in diesem wahlweise auch das Abtasten und Quantisieren des Fehlerstromsignals vorgenommen und dafür auf den Analog-Wandler 3 verzichtet werden. Eine analoge Auslegung der Filter-Einheit 15 ist auch möglich, eine automatische Abstimmung desselben, wie sie nachfolgend beschrieben ist, ist aber dann mit Schwierigkeiten verbunden. In Fig. 1 erfolgt diese automatische Abstimmung der Filter-Einheit 15 über einen Abstimmungs-Eingang, welcher mit einer Signalkonfigurations-Einheit 7 verbunden ist.

Die mit dem Ausgang der Filter-Einheit 15 verbundene Einheit zur Berechnung des Effektivwertes 16 berechnet den Effektivwert des digitalisierten und gefilterten Fehlerstromsignals und gibt diesen an ihrem Ausgang aus, der mit einem Eingang einer Summier-Einheit 14 verbunden ist. An dieser Stelle endet der Filterpfad und mündet in die Summier-Einheit 14, deren Ausgang mit einer Maximalwertüberwachungs-Vorrichtung 17 verbunden ist, die über ein logisches ODER-Glied 18 an die Netztrenn-Einheit 20 angeschlossen ist, welche Maximalwertüberwachungs-Vorrichtung 17 bei Überschreitung eines vorbestimmbaren Grenzwertes die Netztrenn-Einheit 20 betätigt. Dadurch wird der Verbraucher vom Energieversorgungsnetz 40 getrennt.

Die Signalbewertungs-Einheit 16 kann in anderen erfindungsgemäßen Varianten als Einheit zur Berechnung des Spitzenwertes oder als Einheit zur Berechnung des Mittelwertes od. dgl. ausgebildet sein. Da es aber derzeit üblich ist, Fehlerstromgrenzwerte als Effektivwerte festzulegen, ist im Ausführungsbeispiel gemäß Fig.1 die Signalbewertungs-Einheit als Einheit zur Berechnung des Effektivwertes verwirklicht.

Im Transformationspfad 51 ist zunächst ein Verstärker 4 angeordnet, dessen Eingang mit dem Ausgang des Analog-Digital-Wandlers 3 und dessen Ausgang mit dem Eingang der Transformations-Einheit 5 verbunden ist, die das Fehlerstromsignal aus dem Zeitbereich in den Frequenzbereich transformiert.

Der Verstärker 4 verfügt in Fig. 1 über einen Steuereingang, über den sein Verstärkungsfaktor - sowie bei Verstärker 2 - durch die Korrektur-Einheit 45 angepaßt werden kann. Diese Beeinflussungsmöglichkeit kann weggelassen oder an einer anderen Stelle vorgesehen sein. Im Ausführungsbeispiel gemäß Fig.1 ist die Transformations-Einheit durch eine Fourier-Transformations-Einheit 5, insbesondere eine diskrete Fourier-Transformations-Einheit gebildet, welche vorzugsweise mit Hilfe der Fast Fourier-Transformation (FFT) verwirklicht werden kann. Das Zeitsignal wird dabei in ein Frequenzspektrum transformiert.

Es können aber auch andere Transformationsmethoden angewandt werden, sodaß die Transformations-Einheit ebenso gut durch eine Laplace-Transformations-Einheit, insbesondere eine diskrete Laplace-Transformations-Einheit gebildet sein könnte. Die Laplace-Transformation stellt ja eine Verallgemeinerung der Fourier-Transformation dar, deren diskrete Version die z-Transformation darstellt. Weiterführende Möglichkeiten bieten die Gabortransformation, sowie die Wavelet-Transformation, die es ermöglichen, Aussagen über das Zeitverhalten des Frequenzspektrums des Fehlerstromsignals zu machen. Bei der Fourier-Transformation kann ja keine Aussage über das zeitliche Verhalten eines Signalspektrums getroffen werden.

Im Ausführungsbeispiel gemäß Fig.1 ist ein Umschalter 60 am Ausgang der Fourier-Transformations-Einheit 5 vorgesehen, der in seiner Normalstellung eingezeichnet ist, die dem Normalbetrieb des erfindungsgemäßen Fehlerstromschutzschalters entspricht. Zwischen den Ausgang der Transformations-Einheit 5 und den Eingang einer Spektralbewertungs-Einheit 11 ist eine Korrelations-Einheit 8 geschaltet, welche mit einer Einheit zur Speicherung zumindest eines Vergleichsspektrums 12 verbunden ist.

Das in der Fourier-Transformations-Einheit 5 gebildete Signal wird der mit dieser verbundenen Korrelations-Einheit 8 zugeführt, in welcher ein Vergleich des Frequenzspektrums des aktuellen Fehlerstromsignals mit einem oder mehreren gespeicherten Frequenzspektren durchgeführt wird.

Über die Korrelations-Einheit 8 ist die Transformations-Einheit 5 mit der Spektralbewertungs-Einheit, die in Fig.1 als Einheit zur Berechnung des Effektivwertes des Frequenzspektrums 11 ausgebildet ist, verbunden, deren Ausgang mit einem weiteren Eingang der Summier-Einheit 14 verbunden ist.

Der zweiten Stellung des Umschalters 60 entspricht der Konfigurations-Betrieb des erfindungsgemäßen Fehlerstromschutzschalters. Während des Konfigurations-Betriebs ist der Ausgang der Transformations-Einheit 5 an den Eingang einer Signalkonfigurations-Einheit 7 geschaltet, der mit einem Speicher-Eingang der Einheit zur Speicherung zumindest eines Vergleichsspektrums 12 verbunden ist.

### Konfigurations-Betriebsstellung (nicht in Fig.1 gezeigt) des Umschalters 60:

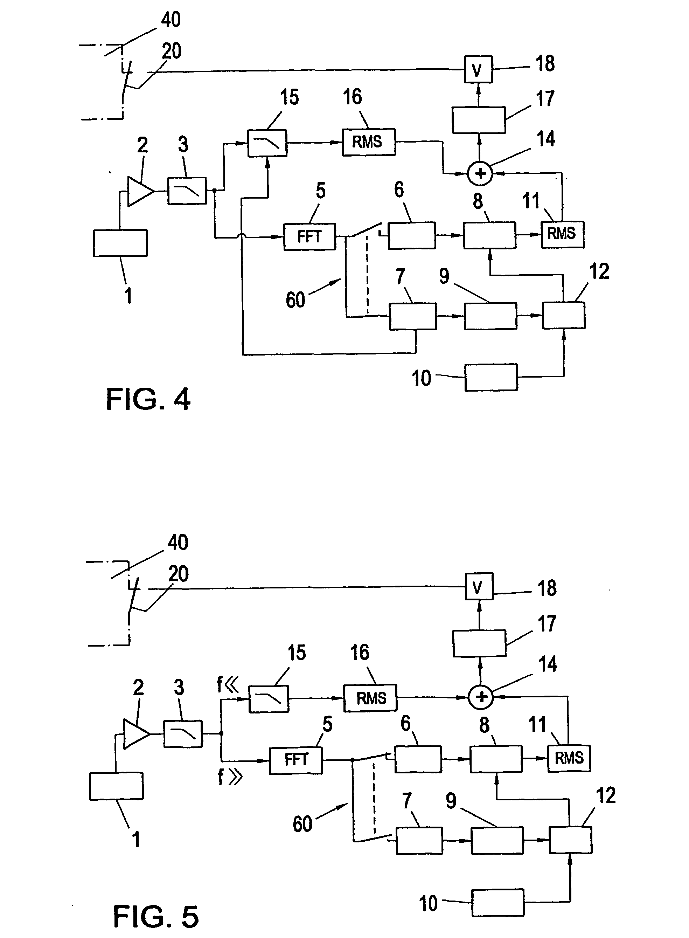

Der Konfigurations-Betrieb (Fig.4) dient der Kalibrierung des erfindungsgemäßen Fehlerstromschutzschalters und der Erfassung der betriebsmäßig möglichen Signalspektren. Dazu werden im Energieversorgungsnetz 40 Lastschwankungen vorgenommen, indem beispielsweise verschiedene an dem Energieversorgungsnetz angeschlossene Verbraucher aktiviert und deaktiviert werden. Während des Konfigurations-Betriebs wird das Spektrum des während des Normalbetriebs auftretenden Fehlerstroms gemessen und unter Berücksichtigung der geltenden Normen in einem Ist-Signalspeicher 9 gespeichert, der zwischen die Signal-Konfigurations-Einheit 7 und der Einheit zur Speicherung des Vergleichsspektrums 12 geschaltet ist.

Da es bei der Messung des Vergleichsspektrums zu Fehlern kommen kann, durch deren Auftreten es zu einer Überschreitung der zulässigen Maximalwerte, die z.B. in einer Norm festgelegt sein können, kommen kann, sind in der Maximalwert-Tabelle 10 die maximal tolerierbaren Normenwerte abgespeichert, welche zur Ermittlung der tatsächlichen Vergleichswerte herangezogen werden, die in der Vergleichsspeicher-Einheit 12 als Grundlage für den Vergleich dienen. Der Ist-Signalspeicher 9 und die Maximalwert-Tabelle 10 können in der Vergleichsspeicher-Einheit 12 beinhaltet sein.

In der Vergleichsspeicher-Einheit 12 sind jedenfalls die gültigen Vergleichswerte gespeichert, die für den Vergleich herangezogen werden. Diese werden durch Begrenzung des im Ist-Signalspeicher 9 gespeicherten Spektrums durch die normenabhängigen Werte aus der Maximalwert-Tabelle 10 gebildet.

Die in der Vergleichsspeicher-Einheit 12 abgelegten Werte dienen im Normal-Betrieb dem Vergleich mit dem aus dem Transformationspfad 51 ermittelten Spektrum und zudem der Einstellung des digitalen Filters 15 mit Tiefpaßcharakteristik im Filterpfad 50, der allgemein auch aus mehreren parallel geschalteten Filtern mit Bandpaßverhalten zusammengesetzt sein kann (Fig. 3). Die Einstellung erfolgt über die Signalkonfigurations-Einheit 7, in der das in der Fourier-Transformations-Einheit 5 transformierte Signal bearbeitet und analysiert wird sowie die Parameter für die Modifikation der Filterkoeffizienten des digitalen Filters 15 mit der Tiefpaßcharakteristik festgelegt werden.

Kommt es im Konfigurations-Betrieb zu einer Überschreitung der maximal zulässigen Werte des Signalspektrums, so führt die Vergleichsspeicher-Einheit 12 eine Notauslösung der Netztrenn-Einheit 20 durch. Zu diesem Zweck ist ein Notauslöse-Ausgang der Vergleichsspeicher-Einheit 12 mit dem logischen ODER-Glied 18 verbunden. Damit wird verhindert, daß einerseits normenwidrige Werte zum Vergleich herangezogen werden, andererseits, daß eine defekte Anlage weiter in Betrieb ist. Es wird eine Meldung an eine Steuereinheit 19 abgegeben, die dann den Konfigurations-Betrieb abbricht.

Die Steuereinheit 19 gibt weiters Korrekturfaktoren und Steuerbefehle aus den Werten des PID-Reglers 43, der Signalkonfigurations-Einheit 7, externen Bedienelementen 26 und eines externen PC 25, welcher über eine graphische Bedieneroberfläche (GUI) auf das System zugreift, aus. Es besteht auch für den Benutzer die Möglichkeit einer manuellen Modifikation der Vergleichswerte im Rahmen der zulässigen Grenzwerte aus den entsprechenden Normen und der Filterparameter des Tiefpaß-Filters 15.

Eine weitere Funktion der Steuereinheit 19 besteht in der Ansteuerung des Umschalters 60, über den zwischen Konfigurations-Betrieb und Normal-Betrieb umgeschaltet werden kann. Wegen der Frequenzauflösung und der erreichbaren Bandbreite werden die Samplerraten und Meßdauer der verschiedenen Betriebsarten mit dem Umschalten des Umschalters 60 ebenfalls angepaßt.

### Normal-Betriebsstellung (in Fig.1 gezeigt) des Umschalters 60:

Im Normal-Betrieb (Fig.5) wird das Fehlerstromsignal laufend gemessen und dem Filterpfad 50 und dem Transformationspfad 51 zugeführt. Signalanteile mit niedrigen Frequenzen werden vom Filter 15 durchgelassen bzw. entsprechend den eingestellten Filterkoeffizienten gedämpft. Signalanteile mit hohen Frequenzen werden im Transformationspfad 51 über die Fourier-Transformations-Einheit 5 in ein Frequenzspektrum umgesetzt, welches in der Korrelations-Einheit 8 mit den im Konfigurations-Betrieb gemessenen und in der Vergleichsspeicher-Einheit 12 gespeicherten Werten verglichen wird. Der Unterschied zwischen dem Frequenzspektrum des aktuell gemessenen Fehlerstromsignals und dem Vergleichsspektrum wird am Ausgang der Korrelations-Einheit 8 ausgegeben, der Effektivwert dieses Ausgangssignals in der Spektralbewertungs-Einheit 11 berechnet und in der Summations-Einheit 14 zu dem durch die Einheit zur Berechnung des Effektivwertes 16 bewerteten Tiefpaß-Signals addiert. Die am Ausgang der Summier-Einheit 14 angeschlossene Maximalwertüberwachungs-Vorrichtung 17 entscheidet über eine Auslösung und betätigt gegebenenfalls die Netztrenn-Einheit 20.

Alle Filteraufgaben - außer die Anti-Aliasing-Filterfunktion-, Berechnungen des Effektivwertes (RMS), mathematische Transformationen, Spektrenvergleich und Maximalwertüberwachung, wie sie im Funktionsblock 100 verwirklicht sind, können in einem integrierten digitalen Signalprozessor (DSP), ASIC oder Mikro-Controller (µC) vorgenommen werden.

Eine mit der Maximalwertüberwachungs-Vorrichtung 17 verbundene Kommunikations-Einheit 13 ermöglicht eine Überwachung des Konfigurations- und Normal-Betriebs sowie der im Normal-Betrieb ermittelten Werte und allgemeiner Systemparameter z.B. über ein Modem und weitere Schnittstellen, z.B. Ethernet-Anschluß, Funkmodul od. dgl..

Findet z.B. eine Maximalwert-Überschreitung statt, wird der Verbraucher vom Energieversorgungsnetz 40 durch Betätigung des Schalters 20 getrennt und es wird eine entsprechende Meldung an die Kommunikations-Einheit 13 weitergegeben, die im einfachsten Fall eine LED oder ein Summer sein kann.

Weiters kann ständig der Wert, welcher zur Maximalwertüberschreitung geführt hat, an die Kommunikations-Einheit 13 ausgegeben werden, um ein laufendes Überwachen der Anlage von außen durchführen zu können.

Zwischen dem Ausgang der Fourier-Transformations-Einheit 5 und dem Eingang der Korrelations-Einheit 8 ist in Fig.1 eine optionale Korrekturfunktions-Einheit 6 angeordnet, die Operationen über eine Systemfunktion h(x) ausführen kann, wie z.B. das Bilden eines Absolutbetrages, das Quadrieren eines Spektrums oder das Abspalten des Imaginärteils.

In der Korrelations-Einheit 8 wird das aktuell gemessene Spektrum mit dem in Konfigurations-Betrieb gemessenen und in der Vergleichsspeicher-Einheit 12 gespeicherten Werten verglichen. Der Vergleich besteht im gezeigten Ausführungsbeispiel gemäß Fig.1 aus einer einfachen Subtraktion, könnte aber auch durch eine andere Korrelationsfunktion geschehen. Es wird ein Maß der Verschiedenheit der beiden in der Korrelations-Einheit verglichenen Signale ermittelt.

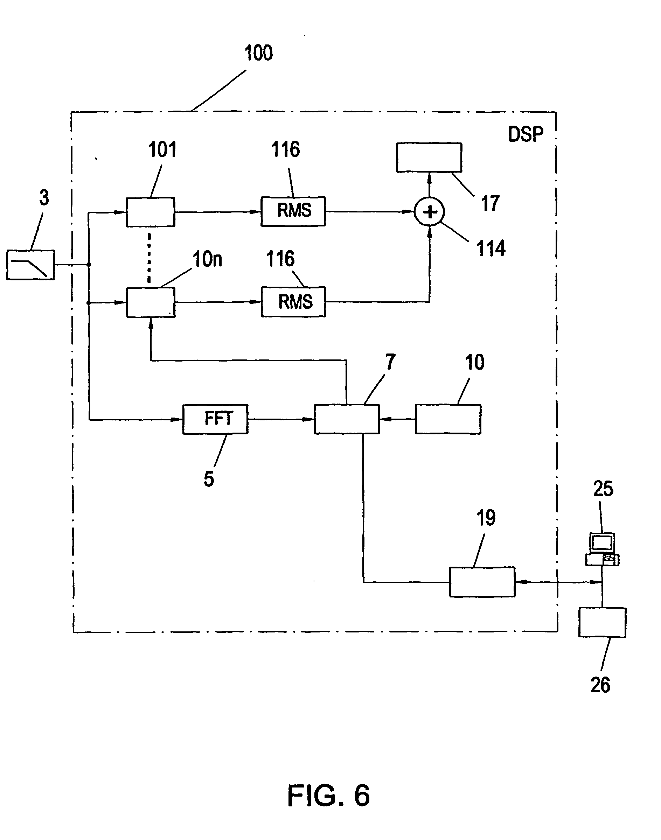

In einer weiteren Variante der Erfindung, die in Fig.6 gezeigt ist, wird der gesamte Frequenzbereich durch parallel geschaltete Filter-Einheiten 101,102 ...,10n mit Bandpaßcharakteristik abgedeckt, sodaß die Fehlerstrom-Information aus der Summe der Ausgänge der Filter-Einheiten 101, 102, ..., 10n gewonnen werden kann.

Der Transformationsteil dient nur mehr der Ermittlung von Filterkoeffizienten. Die Eingänge zur Einstellung dieser Filterkoeffizienten der Filter-Einheiten 101, 102, ..., 10n sind mit entsprechenden Ausgängen der Signal-Konfigurations-Einheit 7 verbunden, welche mit der Transformations-Einheit 5 in Verbindung steht. Die Ausgänge der Filter-Einheiten 101, 102, ..., 10n sind jeweils über eine Signalbewertungs-Einheit 116 mit Eingängen einer Summier-Einheit 114 verbunden und der Ausgang der Summier-Einheit 114 ist mit der Maximalwertüberwachungs-Vorrichtung 17 verbunden, die an die Netztrenn-Einheit 20 angeschlossen ist. Die Maximalwertüberwachungs-Vorrichtung betätigt bei Überschreitung eines vorbestimmbaren Grenzwertes die Netztrenn-Einheit 20. Im Normalbetrieb arbeitet die in Fig.6 gezeigte Ausführungsform somit nur im Zeitbereich.

Gegenstand der Erfindung ist auch ein Verfahren zur Fehlerstrom-Überwachung eines Energieversorgungsnetzes 40, bei dem eine Netztrenn-Einheit 20 betätigt wird, sobald eine Maximalwertüberschreitung eines aus einer Fehlerstrommessung abgeleiteten Fehlerstrom-Meßwertes festgestellt wird.

Zunächst wird der Fehlerstrom signalgetreu abgebildet, das signalgetreue Fehlerstromsignal aus dem Zeitbereich in den Frequenzbereich transformiert und aus dem sich ergebenden Spektrum entweder ein Teilbetrag des Fehlerstrom-Meßwerts berechnet und/oder die Einstellung der Filterkoeffizienten zumindest eines Tiefpaß-Filters zur Filterung des signalgetreuen Fehlerstromsignals bestimmt, wobei aus dem Ausgangssignal des zumindest einen Tiefpaß-Filters der Fehlerstrom-Meßwert oder ein Teilbetrag desselben berechnet wird.

## Patentansprüche

1. Fehlerstromschutzschalter mit einer Einheit zur Detektion eines Fehlerstromes innerhalb eines elektrischen Energieversorgungsnetzes und einer Netztrenn-Einheit, wobei die Einheit zur Detektion eines Fehlerstromes eine Vorrichtung zur signalgetreuen Aufnahme des Fehlerstromes (1, 41), welche mit dem Energieversorgungsnetz (40) koppelbar ist umfasst, die Einheit zur Detektion eines Fehlerstromes eine Fehlerstromanalyse-Eniheit (100) zur spektralen Charakterisierung des Fehlerstromes umfasst, die mit der Netztrenn-Einheit (20) verbunden ist, **dadurch gekennzeichnet, dass** die Fehlerstromanalyse-Einheit (100) zumindest eine Filter-Einheit (15, 101, 102,..., 10n; 151, 152,...15n), mit, vorzugsweise tieffrequenter, Bandpasscharakteristik zur Filterung des Fehlerstromsignals, und eine Transformations-Einheit (5) zum Transformieren des in der Vorrichtung zur signalgetreuen Aufnahme des Fehlerstromes (1, 41) gebildete Fehlerstromsignal aus dem Zeitbereich in einen Bildbereich, vorzugsweise in den Frequenzbereich, umfasst.

2. Fehlerstromschutzschalter nach Anspruch 1, **dadurch gekennzeichnet, dass** die Einheit zur Detektion eines Fehlerstromes weiters eine Einheit zur Abtastung und Quantisierung des Fehlerstromes, vorzugsweise einen Analog-Digital-Wandler (3) umfasst.

3. Fehlerstromschutzschalter nach Anspruch 2, **dadurch gekennzeichnet, dass** die Einheit zur Detektion eines Fehlerstromes weiters ein Anti-Aliasing-Filter umfasst.

4. Fehlerstromschutzschalter nach einem der Ansprüche 1 bis 3, **dadurch gekennzeichnet, dass** die Vorrichtung zur signalgetreuen Aufnahme des Fehlerstromes durch eine Förster-Sonde (41) gebildet ist, deren Ausgang mit einer Regler-Einheit (43) verbunden ist, welche das am Ausgang der Förster-Sonde (41) anliegende Ausgangssignal auf Null kompensiert.

5. Fehlerstromschutzschalter nach Anspruch 4, **dadurch gekennzeichnet, dass** ein Modulator (44) zur Vormagnetisierung der Förster-Sonde (41) vorgesehen ist.

6. Fehlerstromschutzschalter nach einem der Ansprüche 1 bis 3, **dadurch gekennzeichnet, dass** die Vorrichtung zur signalgetreuen Aufnahme des Fehlerstromes durch Shunts, Hall-Bauelemente oder aus Kombinationen aus Magnet- und Hallbauelementen gebildet ist

7. Fehlerstromschutzschalter nach einem der Ansprüche 1 bis 6, **dadurch gekennzeichnet, dass** die zumindest eine Filter-Einheit durch eine Filter-Einheit (15) mit Tiefpasscharakteristik gebildet ist, deren Ausgang mit einer Signalbewertungs-Einheit (16), vorzugsweise einer Einheit zur Berechnung des Effektivwertes des gefilterten Fehlerstromsignals, verbunden ist, dass die Transformations-Einheit (5) mit einer Spektralbewertungs-Einheit (11), vorzugsweise einer Einheit zur Berechnung des Effektivwertes des Frequenzspektrums verbunden ist, und dass der Ausgang der Signalbewertungs-Emheit (16) und der Ausgang der Spektralbewertungs-Einheit (11) mit Eingängen einer Summier-Einheit (14) verbunden sind und der Ausgang der Summier-Einheit (14) mit einer Maximalwertüberwachungs-Vorrichtung (17) verbunden ist, die an die Netztrenn-Einheit (20) angeschlossen ist, welche Maximalwertüberwachungs (17)-Vorrichtung bei Überschreitung eines vorbestimmbaren Grenzwertes die Netztrenn-Einheit (20) betätigt.

8. Fehlerstromschutzschalter nach einem der Ansprüche 1 bis 7, **dadurch gekennzeichnet, dass** die Transformations-Einheit durch eine Fourier-Transformations-Einheit (5), insbesondere eine diskrete Fourier-Transformations-Einheit gebildet ist.

9. Fehlerstromschutzschalter nach einem der Ansprüche 1 bis 7, **dadurch gekennzeichnet, dass** die Transformations-Einheit durch eine Laplace-Transformations-Einheit insbesondere eine diskrete Laplace-Transformations-Einheit gebildet ist.

10. Fehlerstromschutzschalter nach einem der Ansprüche 1 bis 7, **dadurch gekennzeichnet, dass** die Transformations-Einheit durch eine Gabor-Transformations-Einheit oder eine Wavelet-Transformations-Einheit gebildet ist, die Aussagen über das Zeitverhalten des Frequenzspektrums des Fehlerstromsignals ermöglichen.

11. Fehlerstromschutzschalter nach einem der Ansprüche 7 bis 10, **dadurch gekennzeichnet, dass** zwischen den Ausgang der Transformations-Einheit (5) und den Eingang der Spektralbewertungs-Einheit (11) eine Korrelations-Einheit (8) geschaltet ist, welche mit einer Einheit zur Speicherung zumindest eines Vergleichsspektrums (12) verbunden ist.

12. Fehlerstromschutzschalter nach einem der Ansprüche 1 bis 11, **dadurch gekennzeichnet, dass** der Ausgang der Transformatioms-Einheit (5) an den Eingang einer Signalkonfigurations-Einheit (7) schaltbar ist, die mit einem Speicher-Eingang der Einheit zur Speicherung zumindest eines Vergleichsspektrums (12) sowie mit einem Eingang der zumindest einen Filter-Einheit (15) zur Einstellung von Filterkoeffizienten verbunden ist.

13. Fehlerstromschutzschalter nach einem der Ansprüche 1 bis 12, **dadurch gekennzeichnet, dass** die zumindest eine Filter-Einheit durch zwei oder mehrere parallelgeschaltete Filter-Einheiten (101, 102,....,10n) mit Bandpasscharakteristik gebildet ist, die Eingänge zur Einstellung von Filterkoeffizienten aufweisen und deren Ansgänge jeweils über eine Signalbewertungs-Einheit (116) mit Eingängen einer Summier-Einheit (114) verbunden sind und der Ausgang der Summier-Einheit (114) mit einer Maximalwertüberwachungs-Vorrichtung (17) verbunden ist, die an die Netztrenn-Einheit (20) angeschlossen ist, welche Maximalwertüberwachungs-Vorrichtung bei Überschreitung eines vorbestimmbaren Grenzwertes die Netztrenn-Einheit (20) betätigt, und dass die Transformations-Einheit (5) mit einer Signal-Konfigurations-Einheit (7) verbunden ist, deren Ausgänge mit den Eingängen zur Einstellung von Filterkoeffizienten verbindbar sind.

14. Verfahren zur Fehlerstrom-Überwachung eines Energieversorgungsnetzes, bei dem eine Netztrenn-Einheit betätigt wird, sobald eine Maximalwertüberschreitung eines aus einer Fehlerstrommessung abgeleiteten Fehlerstrom-Messwertes festgestellt wird, wobei der Fehlerstrum signalgetreu abgebildet wird, **dadurch gekennzeichnet, dass** das signalgetreue Fehlerstromsignal aus dem Zeitbereich in den Bildbereich, vorzugsweise in den Frequenzbereich, transformiert und aus dem sich ergebenden Spektrum ein Teilbetrag des Fehlerstrom-Messwerts berechnet und/oder die Einstellung der Filterkoeffizienten zumindest eines Filters (15, 101, 102,..., 10n; 151, 152,...15n) mit Bandpasscharakteristik zur, vorzugsweise tieffrequenten, Filterung des signalgetreuen Fehlerstromsignals bestimmt wird, wobei aus dem Ausgangssignal des zumindest einen Filters (15, 101, 102,..., 10n; 151, 152,...15n) mit Bandpasscharakteristik der Fehlerstrom-Messwert oder ein Teilbetrag desselben berechnet wird.

15. Verfahren nach Anspruch 14, **dadurch gekennzeichnet, dass** das Spektrum des Fehlerstromsignals mit wenigstens einem gespeicherten Vergleichsspektrum verglichen wird.

16. Verfahren nach Anspruch 14 oder 15, **dadurch gekennzeichnet, dass** aus dem aus dem Spektrum berechneten Teilbetrag des Fehlerstrom-Messwerts und dem aus dem wenigstens einen Filter (15, 101, 102,..., 10n; 151, 152,...15n) mit Bandpasscharakteristik berechneten Teilbetrag des Fehlerstrom-Messwerts der Fehlerstrom-Messwert gebildet wird.

## Claims

1. A residual current circuit breaker with a unit for detecting a residual current within an electric power supply network and with a network interrupter unit, with the unit for detecting a residual current comprising an apparatus for receiving the residual current (1, 41) in a manner faithful to the signal, which unit can be coupled with the power supply network (40) and comprises a residual current analyzing unit (100) for the spectral characterization of the residual current and is connected with the network interrupter unit (20), **characterized in that** the residual current analyzing unit (100) comprises at least one filter unit (15, 101, 102, ....., 10n, 151, 152, ....., 15n) with preferably low-frequency bandpass characteristics for filtering the residual current signal, and a transformation unit (5) for transforming the residual current signal from the time range into an image range, preferably in the frequency range, which signal is formed in the apparatus for receiving the residual current (1, 41) in a manner faithful to the signal.

2. A residual current circuit breaker according to claim 1, **characterized in that** the unit for detecting a residual current further comprises a unit for scanning and quantifying the residual current, preferably an analog-to-digital converter (3).

3. A residual current circuit breaker according to claim 2, **characterized in that** the unit for detecting a residual current further comprises an anti-aliasing filter.

4. A residual current circuit breaker according to one of the claims 1 to 3, **characterized in that** the apparatus for receiving the residual current in a manner faithful to the signal is formed by a Förster probe (41) whose output is connected with a controller unit (43) which compensates to zero the output signal applied to the Förster probe (41).

5. A residual current circuit breaker according to claim 4, **characterized in that** a modulator (44) is provided for the premagnetization of the Förster probe (41).

6. A residual current circuit breaker according to one of the claims 1 to 3, **characterized in that** the apparatus for receiving the residual current in a manner faithful to the signal is formed by shunts, Hall-effect components or combinations of magnetic and Hall-effect components.

7. A residual current circuit breaker according to one of the claims I to 6, **characterized in that** the at least one filter unit is formed by a filter unit (15) with low-pass characteristics whose output is connected with a signal evaluation unit (16), preferably a unit for calculating the effective value of the filtered residual current signal, that the transformation unit (5) is connected with a spectral evaluation unit (11), preferably a unit for calculating the effective value of the frequency spectrum, and that the output of the signal evaluation unit (16) and the output of the spectral evaluation unit (11) are connected with the input of a summing unit (14) and the output of the summing unit (14) is connected with a maximum value monitoring apparatus (17) which is connected to the network interrupter unit (20), which maximum value monitoring apparatus (17) actuates the network interrupter unit when a threshold value which can be predetermined is exceeded.

8. A residual current circuit breaker according to one of the claims 1 to 7, **characterized in that** the transformation unit is formed by a Fourier transformation unit (5), especially a discrete Fourier transformation unit.

9. A residual current circuit breaker according to one of the claims 1 to 7, **characterized in that** the transformation unit is formed by a Laplace transformation unit, especially a discrete Laplace transformation unit.

10. A residual current circuit breaker according to one of the claims 1 to 7, **characterized in that** the transformation unit is formed by a Gabor transformation unit or a wavelet transformation unit, which allows making statements on the time behaviour of the frequency spectrum of the residual current signal.

11. A residual current circuit breaker according to one of the claims 7 to 10, **characterized in that** a correlation unit (8) is switched between the output of the transformation unit (5) and the input of the spectral evaluation unit (11), which correlation unit is connected with a unit for storing at least one comparative spectrum (12).

12. A residual current circuit breaker according to one of the claims 1 to 11, **characterized in that** the output of the transformation unit (5) can be switched to the input of a signal configuration unit (7) which is connected with a storage input of the unit for storing at least one comparative spectrum (12) and with an input of the at least one filter unit (15) for setting the filter coefficient.

13. A residual current circuit breaker according to one of the claims 1 to 12, **characterized in that** the at least one filter unit is formed by two or more filter units (101, 102, ...., 10n) which are switched in parallel, have bandpass characteristics and comprise inputs for setting filter coefficients and whose outputs are each connected with the inputs of a summing unit (114) via a signal evaluation unit (116), and the output of the summing unit (114) is connected with a maximum value monitoring apparatus (17) which is connected to the network interrupter unit (20), which maximum value monitoring apparatus actuates the network interrupter unit (20) when a predetermined threshold value is exceeded, and that the transformation unit (5) is connected with a signal configuration unit (7) whose outputs can be connected with the inputs for setting filter coefficients.

14. A method for monitoring the residual current of a power supply network, in which a network interrupter unit is actuated as soon it is determined that a maximum value of a residual current measured value derived from a residual current measurement is exceeded, with the residual current being pictured faithful to the signal, **characterized in that** the residual current signal which is faithful to the signal is transformed from the time range into the image range, preferably in the frequency range, and a partial amount of the residual current measured value is calculated from the obtained spectrum and/or the setting of the filter coefficients of at least one filter (15, 101, 102, ....., 10n; 151, 152, ....., 15n) with bandpass characteristics is determined for filtering, preferably low-pass, of the residual current signal which is faithful to the signal, with the residual current measured value or a partial amount of the same being calculated from the output signal of the at least one filter (15, 101, 102, ....., 101n; 151, 152, ....., 15n) with bandpass characteristics.

15. A method according to claim 14, **characterized in that** the spectrum of the residual current signal is compared with at least one stored comparative spectrum.

16. A method according to claim 14 or 15, **characterized in that** the residual current measured value is formed from the partial amount of the residual current measured value calculated from the spectrum and the partial amount of the residual current measured value calculated from the at least one filter (15, 101, 102, ...., 10n; 151, 152, ....., 15n) with bandpass characteristics.

## Revendications

1. Interrupteur de protection contre les courants des fuite avec une unité pour la détection d'un courant de fuite à l'intérieur d'un réseau d'alimentation en énergie électrique et une unité de sectionnement du réseau, dans lequel l'unité pour la détection des courants de fuite comprend un dispositif pour l'enregistrement fidèle au signal du courant de fuite (1, 41), qui peut être couplé avec le réseau d'alimentation en énergie (40), l'unité pour la détection des courants de fuite comprend une unité d'analyse du courant de fuite (100) pour la caractérisation spectrale du courant de fuite, qui communique avec l'unité de sectionnement du réseau (20), **caractérisé en ce que** l'unité d'analyse du courant de fuite (100) possède un au moins une unité de filtrage (15, 101, 102... 10n ; 151, 152... 15n) avec une caractéristique de bande passante, de préférence à basse fréquence, pour le filtrage du signal de courant de fuite, et une unité de transformation (5) pour la transformation du signal de courant de fuite formé dans le dispositif pour l'enregistrement fidèle au signal du courant de fuite (1, 41) de la plage de temps à une plage d'image, de préférence à la plage de fréquence.

2. Interrupteur de protection contre les courants de fuite selon la revendication 1, **caractérisé en ce que** l'unité pour la détection d'un courant de fuite comprend en outre une unité pour la capture et la quantification du courant de fuite, de préférence un convertisseur analogique-numérique (3).

3. Interrupteur de protection contre les courants de fuite selon la revendication 1, **caractérisé en ce que** l'unité pour la détection des courants de fuite comprend en outre un filtre anti-crénelage.

4. Interrupteur de protection contre les courants de fuite selon l'une quelconque des revendications 1 à 3, **caractérisé en ce que** le dispositif pour l'enregistrement fidèle au signal du courant de fuite est formé par une sonde Forster (41) dont la sortie est reliée à une unité de régulation (43) qui compense à zéro le signal présent à la sortie de la sonde Forster (41).

5. Interrupteur de protection contre les courants de fuite selon la revendication 4, **caractérisé en ce qu'**il est prévu un modulateur (44) pour la pré-magnétisation de la sonde Forster (41).

6. Interrupteur de protection contre les courants de fuite selon l'une quelconque des revendications 1 à 3, **caractérisé en ce que** le dispositif pour l'enregistrement fidèle au signal du courant de fuite est formé par des shunts, des éléments à effet Hall ou des combinaisons d'éléments magnétiques et à effet Hall.

7. Interrupteur de protection contre les courants de fuite selon l'une quelconque des revendications 1 à 6, **caractérisé en ce que** l'unité de filtrage au nombre d'une au moins est formée par une unité de filtrage (15) à caractéristique passe-bas, dont la sortie est reliée à une unité d'évaluation des signaux (16), de préférence à une unité pour le calcul de la valeur effective du signal de courant de fuite filtré, **en ce que** l'unité de transformation (5) est reliée à une unité d'évaluation spectrale (11), de préférence une unité pour le calcul de la valeur effective du spectre de fréquence, et **en ce que** la sortie de l'unité d'évaluation du signal (16) et la sortie de l'unité d'évaluation spectrale (11) sont reliées à des entrées d'une unité d'addition (14) et la sortie de unité d'addition (14) est reliée à un dispositif de surveillance de valeur maximale (17), qui est relié à l'unité de sectionnement du réseau (20), lequel dispositif de surveillance de valeur maximale (17) actionne l'unité de sectionnement du réseau (20) si une limite pouvant être prédéterminée est dépassée.

8. Interrupteur de protection contre les courants de fuite selon l'une quelconque des revendications 1 à 7, **caractérisé en ce que** l'unité de transformation est formée par une unité de transformation de Fourier (5), en particulier une unité de transformation de Fourier discrète.

9. Interrupteur de protection contre les courants de fuite selon l'une quelconque des revendications 1 à 7, **caractérisé en ce que** l'unité de transformation est formée par une unité de transformation de Laplace, en particulier une unité de transformation de Laplace discrète.

10. Interrupteur de protection contre les courants de fuite selon l'une quelconque des revendications 1 à 7, **caractérisé en ce que** l'unité de transformation est formée par une unité de transformation de Gabor ou une unité de transformation à ondelettes, permettant des prévisions sur le comportement dans le temps du spectre de fréquence du signal de courant de fuite.

11. Interrupteur de protection contre les courants de fuite selon l'une quelconque des revendications 7 à 10, **caractérisé en ce qu'**il est prévu entre la sortie de l'unité de transformation (5) et l'entrée de l'unité d'évaluation spectrale (11) une unité de corrélation (8) reliée à une unité de mémorisation d'au moins un spectre comparatif (12).

12. Interrupteur de protection contre les courants de fuite selon l'une quelconque des revendications 1 à 11, **caractérisé en ce que** la sortie de l'unité de transformation (5) peut être connectée à l'entrée d'une unité de configuration de signal (7), qui est reliée à une entrée de mémoire de l'unité de mémorisation d'au moins un spectre comparatif (12) ainsi qu'à une entrée de l'unité de filtrage (15) au nombre d'une au moins pour le réglage de coefficients de filtrage.

13. Interrupteur de protection contre les courants de fuite selon l'une quelconque des revendications 1 à 12, **caractérisé en ce que** l'unité de filtrage au nombre d'une au moins est formée par deux ou plusieurs unités de filtrage (101, 102, ... 10n) montées en parallèle et ayant une caractéristique de bande passante, qui présentent des entrées pour le réglage de coefficients de filtre et dont les sorties sont reliées chacune par une unité d'interprétation de signaux (116) avec des entrées de l'unité d'addition (114) et la sortie de l'unité d'addition (114) est reliée à un dispositif de surveillance de valeur maximale (17), qui est relié à l'unité de sectionnement du réseau (20), lequel dispositif de surveillance de valeur maximale actionne l'unité de sectionnement du réseau (20) si une valeur limite pouvant être prédéterminée est dépassée, et **en ce que** l'unité de transformation (5) est reliée à une unité de configuration du signal (7) dont les sorties peuvent être reliées aux entrées pour le réglage du coefficient de filtrage.

14. Procédé pour la surveillance de courants de fuite dans un réseau d'alimentation en énergie, dans lequel une unité de sectionnement du réseau est actionnée dès qu'un dépassement d'une valeur maximale d'une valeur de mesure de courant de fuite dérivée d'une mesure de courant de fuite est constaté, dans lequel le courant de fuite est reproduit de manière fidèle au signal, **caractérisé en ce que** le signal de courant de fuite fidèle au signal est transformé de la plage de temps à la plage d'image, de préférence à la plage de fréquence, et une partie de la valeur de mesure du courant de fuite est calculée à partir du spectre obtenu et/ou le réglage des coefficients de filtre d'au moins un filtre (15, 101, 102... 10n ; 151, 152... 15n) à caractéristique de bande passante est déterminé pour le filtrage, de préférence à basse fréquence, du signal de courant de fuite fidèle au signal, le signal de sortie du filtre (15, 101, 102... 10n ; 151, 152... 15n) au nombre d'un au moins à caractéristique de bande passante étant utilisé pour calculer la valeur de mesure du courant de fuite ou une partie de celle-ci.

15. Procédé selon la revendication 14, **caractérisé en ce que** le spectre du signal de courant de fuite est comparé avec au moins un spectre comparatif conservé en mémoire.

16. Procédé selon la revendication 14 ou 15, **caractérisé en ce que** la valeur de mesure du courant de fuite est formée à partir de la partie de la valeur de mesure du courant de fuite calculée à partir du spectre et de la partie de la valeur de mesure du courant de fuite calculée à partir du filtre (15, 101, 102... 10n ; 151, 152... 15n) au nombre d'un au moins à caractéristique de bande passante.
